# EUROPEAN PATENT SPECIFICATION

(11) **EP 2 752 292 B1**
(45) Date of publication and mention of the grant of the patent: **28.09.2016**
(21) Application number: 14150236.9
(22) Date of filing: 06.01.2014
(51) Int. Cl.: B32B 17/10, E04C 2/54, C03C 27/12, E06B 3/66

(54) **Laminated glazing**
Verbundglasscheibe
Vitrage feuilleté

(30) Priority: 07.01.2013 GB 201300191
(43) Date of publication of application: 09.07.2014
(73) Proprietor: Pilkington Deutschland AG, 45884 Gelsenkirchen (DE)
(72) Inventor: Mueller, Kurt-Henrik, 41464 Neuss (DE); Bloesser, Roland, 45886 Gelsenkirchen (DE)
(74) Representative: Stanley, Andrew Thomas

(56) References cited:
- WO-A1-99/42675
- DE-A1- 1 496 047
- DE-U- 7 225 428
- DE-U1-202012 008 079

## Description

The present invention relates to a laminated glazing, in particular a laminated glazing having a channel-section glazing element, and to a method of making such a laminated glazing.

Laminated glazings are well known in the art. Usually a laminated glazing comprises two panes of glazing material joined by an adhesive interlayer ply such as polyvinyl butyral (PVB). Usually each pane of glazing material has the same shape periphery, although the thickness of each pane may be different.

Glazing elements are known having a profiled or channel-section configuration. A profiled or channel-section glazing element is made from a sheet or ribbon of glass and has at least one lateral edge bent upwards during manufacture. Usually both lateral edges are bent upwards during manufacture. Examples of making a channel-section glazing element are described in DE1496047A1. The upward facing portions of the channel-section glazing element are known in the art as "flanges" and the lower portion connected to the or each flange is known as a "web". Since channel-section glazing elements are made from a continuous glass sheet or ribbon and cut to the desired length, the flanges are a continuation of the web and are at an angle thereto. Usually the flanges are at an angle of substantially 90° to the web. A channel-section glazing element having two lateral flanges is often referred to as a U-profile glazing element because the channel-section glazing element has a U-shaped cross section.

To increase the functionality of such channel-section glazing elements the channel-section glazing element may be subjected to a secondary processing operation. One such operation is to thermally or chemically toughen the glass. Another such operation is to apply coatings to the interior and/or exterior of the channel to give the glazing certain optical characteristics. It is also known to laminate channel-section glazing elements to other channel-section glazing elements or to flat glass sheets, see for example DE7225428U1.

In practice there is a thickness variation across the length of the web which makes lamination particularly difficult. The method of manufacture of the channel-section i.e. by forming between a pair of opposed rollers, causes the opposed surfaces of the web to be wave-like, although substantially parallel. One solution is to use a cast in place resin as described in WO2006050927A1. The liquid resin can conform to the irregularities of the web surface and the upper surface of the liquid resin is flat. Once cured, the resin becomes a ply for a laminated glazing. Using such liquid resins requires special handling conditions and both ends of the channel-section glazing element must be sealed to ensure the liquid resin does not escape.

It is convenient to use adhesive layers that are in sheet form prior to being incorporated into a laminated glazing. Such adhesive layers are often referred to as interlayers. An interlayer is a sheet of adhesive material that is in sheet form prior to being incorporated into a laminated glazing. Well known examples of such interlayer materials include polyvinyl butyral (PVB), copolymers of ethylene, such as ethylene vinyl acetate (EVA) and polyurethane, in particular thermoplastic polyurethane (TPU). Another class of interlayer are ionomeric resins, including in particular those disclosed in WO 99/58334. Resins of this type are commercially available from DuPont under their Trade Mark SentryGlas.

Laminated channel-section glazings are described in DE7225428U and DE202012008079U1 where an interlayer extends across the interior or exterior surface of the web.

US 6,546,690B1 describes laminated channel-section glazing elements wherein the channel-section glazing element is semi-toughened or toughened.

The European Standard BS EN 572-7(2012) specifies dimensional and minimum quality requirements (in respect of visual and wire faults) for channel shaped glass, as defined in BS EN 572-1(2012), for use in building.

It has been found that by using a thick adhesive interlayer and a thin flat glass sheet it is possible to produce a laminated glazing that is relatively simple to manufacture and avoids the problems interfacial adhesion and bubble formation due to thickness variations in the web of a channel-section glazing element.

Accordingly the present invention provides from a first aspect a laminated glazing comprising a channel-section glazing element and a sheet of glazing material laminated thereto, the channel-section glazing element having a web and at least one flange, wherein the sheet of glazing material is laminated to the web via an adhesive interlayer, characterised in that the web has a thickness between 4mm and 12mm, the sheet of glazing material has a thickness between 0.5mm and 3.5mm and the interlayer in the laminated glazing has a thickness between 0.8mm and 2.3mm.

The thick adhesive interlayer is able to conform to the inner surface of the web and the thin flat glass sheet is able to flex slightly to compensate for the uneven lamination surface of the web.

Preferably the channel-section glazing element has a first flange portion running along a lateral edge of the web and a second flange portion running along the opposing lateral edge of the web. As is known in the art, such a channel-section glazing element having a web and two opposing flanges is formed by bending a continuous ribbon of glass, as described in DE1496047A1, with particular reference to Figure 1 thereof and the related description thereof.

Preferably the thickness of the adhesive interlayer in laminated glazing is the same, or substantially the same, as the thickness of the adhesive interlayer prior to being incorporated in the laminated glazing.

When the lamination surface has a wave-like variation, which may be sinusoidal, and the period of which may be many centimetres or many tens of centimetres, the adhesive interlayer follows the wave-like surface of the lamination surface and consequently the thickness of the adhesive interlayer in the laminated glazing may vary from the thickness of the adhesive interlayer prior to being incorporated in the laminated glazing.

There may be thickness variations across and/or along the inner web surface the channel-section glazing element such that the thickness of the adhesive interlayer in the laminated glazing may vary by up to ± 20% from the thickness of the adhesive interlayer before being incorporated into the laminated glazing. For example, for a sheet of adhesive interlayer having a thickness of 1.52mm prior to being incorporated in the laminated glazing, the thickness of the adhesive interlayer in the laminated glazing may range from 1.216mm and 1.824mm for a ±20% variation. Preferably the thickness of the adhesive interlayer in the laminated glazing may vary by up to ± 10% from the thickness of the adhesive interlayer before being incorporated into the laminated glazing. For example, for a sheet of adhesive interlayer having a thickness of 1.52mm prior to being incorporated in the laminated glazing, the thickness of the adhesive interlayer in the laminated glazing may range from 1.368mm and 1.672mm for a ±10% variation. Preferably the thickness of the adhesive interlayer in the laminated glazing may vary by up to ± 5% from the thickness of the adhesive interlayer before being incorporated into the laminated glazing. For example, for a sheet of adhesive interlayer having a thickness of 1.52mm prior to being incorporated in the laminated glazing, the thickness of the adhesive interlayer in the laminated glazing may range from 1.444mm and 1.596mm for a ±5% variation.

Preferably the adhesive interlayer is in sheet form prior to being incorporated into the laminated glazing.

Preferably the sheet of glazing material has a thickness between 1mm and 3.2mm, more preferably 2.1mm and 3mm. The relatively thin sheet of glazing material is able to adapt to the wavy inner surface of the web.

Preferably the adhesive interlayer in the laminated glazing has a thickness between 0.8mm and 1.6mm, more preferably between 0.8mm and 1.2mm.

Preferably the adhesive interlayer prior to being incorporated in the laminated glazing has a thickness between 0.8mm and 2.3mm, more preferably between 0.8mm and 1.6mm, even more preferably between 0.8mm and 1.2mm.

Preferably the adhesive interlayer in the laminated glazing or prior to being incorporated in the laminated glazing has a thickness between 1.0mm and 2.3mm, more preferably between 1.0mm and 1.6mm, even more preferably between 1.1mm and 1.6mm.

Preferably the adhesive interlayer comprises a first layer of a first interlayer material and a second layer of a second interlayer material. In embodiments where there is a first layer of a first interlayer material and a second layer of a second interlayer material, preferably the first interlayer material is the same as the second interlayer material. Preferably the first interlayer material is in sheet form prior to being incorporated into the laminated glazing. Preferably the second interlayer material is in sheet form prior to being incorporated into the laminated glazing. Preferably the thickness of the first layer of first interlayer material is the same as the thickness of the second layer of second interlayer material. Preferably the thickness of the first layer of interlayer material in the laminated glazing or prior to being incorporated in the laminated glazing is between 0.4mm and 1.5mm, more preferably 0.76mm. Preferably the thickness of the second layer of interlayer material in the laminated glazing or prior to being incorporated in the laminated glazing is between 0.4mm and 1.5mm, more preferably 0.76mm. Preferably the first layer of first interlayer material is a sheet of PVB. Preferably the second layer of second interlayer material is a sheet of PVB.

Other embodiments of the first aspect of the present invention have other preferable features.

Suitably the adhesive interlayer comprises a plurality of adhesive interlayers. For example there may be four sheets of 0.38mm thick PVB.

Preferably the sheet of glazing material is flat.

Preferably the sheet of glazing material is coextensive with the adhesive interlayer.

Preferably the interlayer extends beyond at least one edge of the sheet of glazing material.

Suitably the sheet of glazing material has a pattern on at least one surface thereof.

Suitably the sheet of glazing material is a glass sheet. Suitably the glass sheet is formed by the float process or a rolled process.

Suitably the sheet of glazing material comprises at least one sheet of soda-lime-silicate glass having a composition as defined in BS EN 572-1(2012).

Preferably the sheet of glazing material is a flat sheet of annealed float glass according to BS EN 572-1(2012) and BS EN 572-2(2012).

Suitably the sheet of glazing material is a plastic material such as polycarbonate.

Suitably the sheet of glazing material is a laminated pane comprising two panes of glazing material joined by an adhesive interlayer.

The sheet of glazing material has a periphery. Preferably the periphery of the sheet of glazing material is a quadrilateral, more preferably a rectangle, even more preferably a square.

Preferably the adhesive interlayer is in between the inner surfaces of the channel and the sheet of glazing material. In this embodiment the sheet of glazing material is suitably sized such that the sheet of glazing material fits between the flanges.

Suitably the transition from the web to the flange is not abrupt and instead there is a curved region between the web and at least one flange. Preferably the adhesive interlayer extends into the curved region. Preferably the sheet of glazing material is spaced from the curved region although the sheet of glazing material may extend into the curved region. When there are two flanges, there are two curved regions. Preferably the sheet of glazing material is spaced from both curved regions.

Preferably the sheet of glazing material is spaced from the or each flange by the adhesive interlayer.

Suitably the channel-section is annealed glass. Suitably the channel section is not semi-toughened glass. Suitably the channel section is not toughened glass.

Suitably the sheet of glazing material is annealed glass. Suitably the sheet of glazing material is not semi-toughened glass. Suitably the sheet of glazing material is not toughened glass.

A channel-section glazing element made of annealed glass has not been subjected to any secondary processing to thermally strengthen the glass. Thermally toughened soda lime silicate channel shaped safety glass is defined in BS EN 15683-1(2013) section 3.1 as glass within which a permanent surface compressive stress has been induced by a controlled heating and cooling process in order to give it greatly increased resistance to mechanical and thermal stress and prescribed fragmentation characteristics. In the field of glass in building, thermally toughened soda lime silicate channel shaped safety glass is defined in BS EN 15683-1(2013) and BS EN 15683-2(2013).

In the field of glass in building, thermally toughened flat soda-lime-silicate safety glass is defined in BS EN 12150-1 (2000). Section 3.1 of this standard defines thermally toughened soda lime silicate safety glass as "glass within which a permanent surface compressive stress has been induced by a controlled heating and cooling process in order to give it greatly increased resistance to mechanical and thermal stress and prescribed fragmentation characteristics.

Glass may be semi-toughened or heat strengthened. Such glass for use in building is defined according to BS EN 1863-1 (2000). Heat strengthened glass is not toughened glass as defined in BS EN 12510-1 (2000) but has undergone some form of heat treatment.

Soda lime silicate glass for use in building may also be termed "heat soaked thermally toughened soda lime silicate glass" and is defined in accordance with EN 14179-1 (2005). In section 3.1 of this standard, heat soaked thermally toughened soda lime silicate safety glass is 25 defined as glass within which a permanent surface compressive stress has been induced in order to give it greatly increased resistance to mechanical and thermal stress and prescribed fragmentation characteristics and which has a known level of residual risk of spontaneous breakage due to the presence of critical nickel sulphide (NiS) inclusions.

Preferably the adhesive interlayer comprises PVB, EVA or TPU.

Preferably the adhesive interlayer comprises an ionomeric resin.

Preferably the adhesive interlayer is coloured.

Preferably the web has a thickness between 5mm and 8mm.

Preferably the or each flange has a thickness of between 4mm and 12mm, more preferably between 5mm and 8mm.

Preferably the thickness of the web is the same as the thickness of the or each flange.

When there are two flanges, preferably the thickness of each flange is the same.

Preferably the laminated glazing is in mechanical communication with another glazing component such as a channel-section glazing element.

Preferably the laminated glazing is part of a double glazed unit. Preferably the double glazed unit is part of a façade.

The present invention also provides from a second aspect a method for producing a laminated glazing comprising the steps (i) providing a channel-section glazing element having a web and at least one flange, the web having a thickness between 4mm and 12mm, (ii) positioning a sheet of adhesive interlayer on the web, the adhesive interlayer having a thickness between 0.8mm and 2.3mm, (iii) positioning a sheet of glazing material having a thickness between 0.5mm and 3.5mm on the sheet of adhesive interlayer, and (iv) laminating the assembly of channel-section glazing element, adhesive interlayer and sheet of glazing material under suitably high temperature and pressure to laminate the sheet of glazing material to the web via the adhesive interlayer.

Preferably before step (ii), a sheet of adhesive interlayer having a thickness of between 0.38mm and 0.76mm is positioned on the web.

Preferably after step (ii), a sheet of adhesive interlayer having a thickness of between 0.38mm and 0.76mm is positioned on the web.

Within the context of the present invention, when an adhesive interlayer is positioned on the web, this does not rule out the possibility of there being one or more adhesive interlayers, sheets of glazing material, plastic plies or coatings between the adhesive interlayer and the web i.e. for a web *A* having an interlayer *B* thereon, there may be adhesive interlayers *C*, *D, E* etc in between web *A* and adhesive interlayer *B.*

Preferably the sheet of glazing material has a thickness between 1mm and 3.2mm, more preferably between 2.1mm and 3mm.

Preferably the adhesive interlayer comprises PVB, EVA or TPU.

The invention will now be described with reference to the following figures (not to scale) in which,
Figure 1 is a cross sectional view of a laminated glazing according to the first aspect of the present invention;
Figure 2 is an enlarged view of the corner region A of figure 1;
Figure 3 is a cross sectional view of another laminated glazing according to the first aspect of the present invention;
Figure 4 is a cross sectional view of another laminated glazing according to the first aspect of the present invention;
Figure 5 is a cross sectional view of another laminated glazing according to the first aspect of the present invention;
Figure 6 is a cross sectional view of another laminated glazing according to the first aspect of the present invention;
Figure 7 is a cross sectional view of another laminated glazing according to the first aspect of the present invention;
Figure 8 is a cross sectional view of a portion of a double glazed facade comprising a number of laminated glazings in accordance with the first aspect of the present invention;
Figure 9 is a cross sectional view of a portion of a double glazed facade comprising a number of laminated glazings in accordance with the first aspect of the present invention and a number of conventional channel-section glazing elements;
Figure 10 is a front view of a part of a facade for a building incorporating four laminated glazings according to the present invention; and
Figure 11 is an isometric projection of the laminated glazing shown is figures 1, 3, 4, 5 and 6.

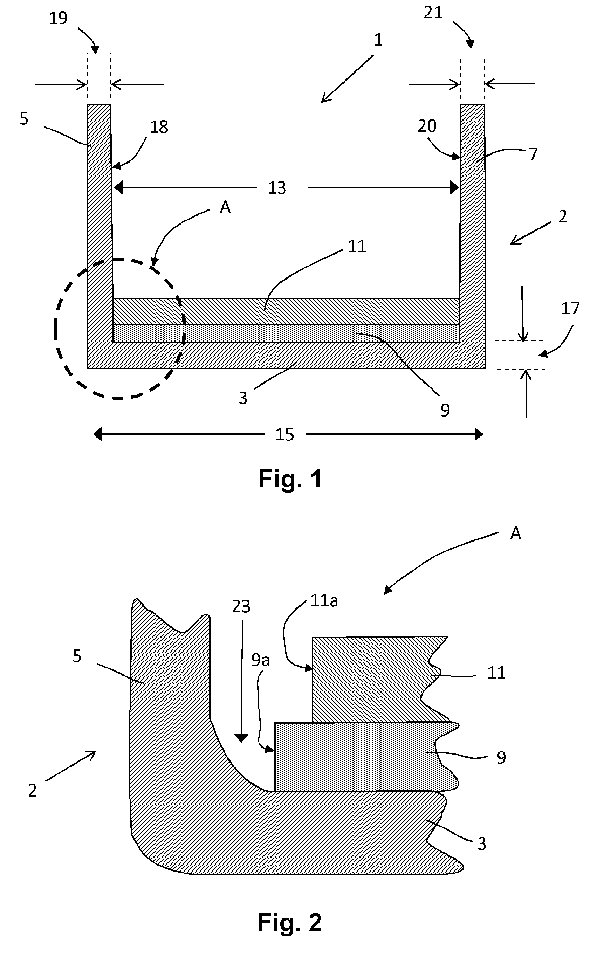

Figure 1 shows a cross section of a laminated glazing 1. The laminated glazing 1 has a channel-section glazing element 2 of annealed glass. The channel-section glazing element 2 has a web 3, a first flange 5 and a second flange 7. The flanges 5, 7 are continuous with the web 3 and the channel-section glazing element has been bent from an initially flat sheet or ribbon of glass, for example as described in DE1496047A1.

The flanges 5, 7 are substantially perpendicular to the web 3. The flange 5 has an inner facing surface 18 and the flange 7 has an inner facing surface 20. Each flange 5, 7 has an outer facing surface opposite the respective inner facing surface.

The web 3 has a thickness 17 of 7mm. The first flange 5 has a thickness 19 of 7mm and the second flange 7 has a thickness 21 of 7mm. The width 15 of the channel-section glazing element 2 is 30cm. The separation of the inner faces of the flanges 5, 7 is denoted by arrow 13. In this example the separation 13 is 28.6mm (=30cm - 2 x 7mm).

The distance each flange extends upwards from the web is the same, or substantially the same.

The channel-section glazing element 2 is often referred to as a U-profiled glazing because of the shape of the channel-section glazing element in cross section.

Inside the channel defined by the web and first and second flanges a flat annealed glass sheet 11 is laminated to the inner facing surface of web 3 via adhesive interlayer 9. In this embodiment the adhesive interlayer is PVB and has a thickness of 1.52mm. The flat annealed glass sheet is 3mm thick but may be 2.1mm thick. The flat glass sheet 11 is joined to the web 3 via adhesive interlayer 9.

The channel-section glazing element 2 and the flat annealed glass sheet 11 both have a composition as defined in BS EN 572-1(2012). The flat annealed glass sheet 11 is a pane of float glass as defined in BS EN 572-2(2012).

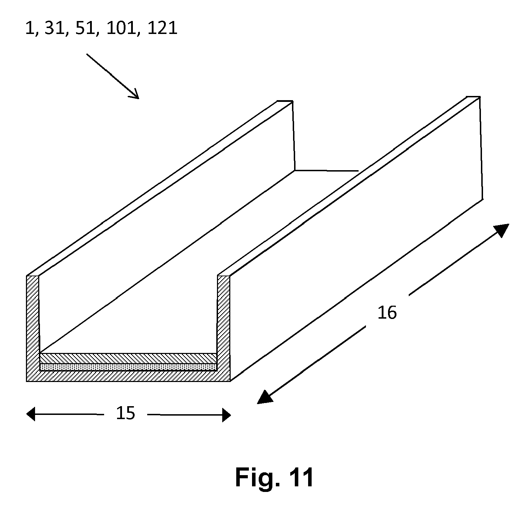

The method of manufacturing the channel-section glazing element causes the surfaces of the web to be wavelike (but typically parallel) along the length of the web i.e. in the direction of the length 16 shown in figure 11. The period of the wavelike variation may be many centimetres or many tens of centimetres.

As is known in the art, the European Standard BS EN 572-7(2012) specifies dimensional and minimum quality requirements (in respect of visual and wire faults) for channel shaped glass, as defined in BS EN 572-1(2012), for use in building.

Figure 2 shows an enlarged view of the corner region A of figure 1. When the channel-section glazing element 2 is manufactured, the lateral edges of an initially flat glass sheet or ribbon of glass are bent upwards to form the flanges 5, 7. This forms a curved region 23 between the web and the flanges 5, 7 (flange 7 is not shown in figure 2).

In this example, the adhesive interlayer 9 does not extend into the curved region 23 and there is a space between the edge 9a of the adhesive interlayer 9 and the curved region 23. The flat annealed glass sheet 11 does not extend to the edge of the adhesive interlayer 9 and the edge 11a of the glass sheet 11 does not extend into the curved region 23. In an alternative embodiment to that shown in figure 2, the edges 11a of the flat annealed glass sheet 11 are aligned with the edges 9a of the adhesive interlayer 9.

In embodiments of the invention where there is a space between the edges of the sheet of glazing material and/or the edges of the adhesive interlayer and the curved region and/or the inner face of the respective flange (as illustrated in figure 2) the space may be filled with a suitable sealant.

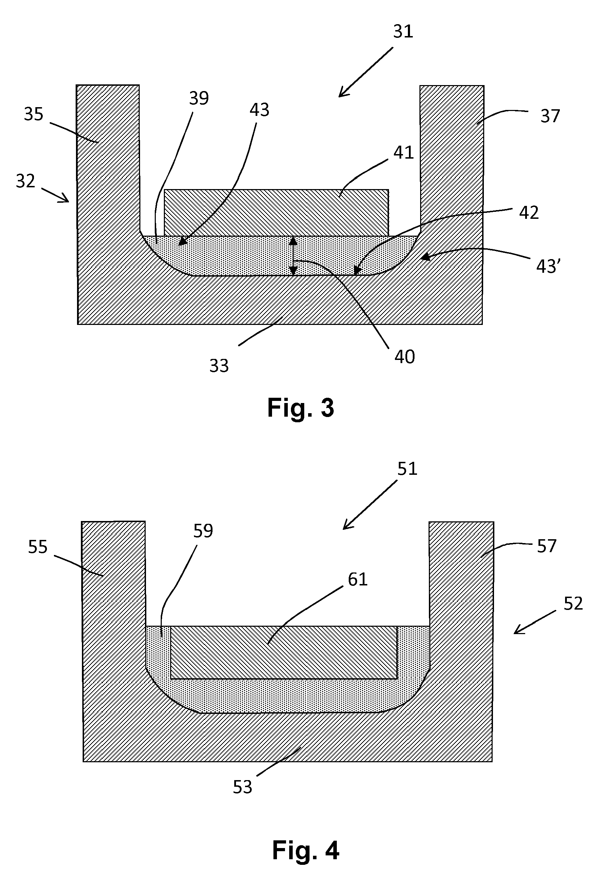

Figure 3 shows a cross sectional view of another laminated glazing 31 in accordance with the first aspect of the present invention. The laminated glazing 31 has a channel-section glazing element 32 of annealed glass. The channel-section glazing element has a web 33 that is 6mm thick. Extending upwards from the lateral edges of the web of the channel-section glazing element 32 is a first flange 35 and a second flange 37. The flanges 35, 37 have a thickness of 6mm.

Between each flange 35, 37 and the web 33 is a respective curved region 43, 43'. In this example an adhesive interlayer 39 of PVB extends into each curved region. The thickness of the interlayer 39 is denoted by arrow 40 and in this example the thickness of the adhesive interlayer is 1.52mm. Since the inner facing surface 42 of web 33 may not be perfectly flat, the thickness of the interlayer 39 may vary slightly across the web or down the length thereof. However prior to being incorporated into the laminated glazing 31, the interlayer 39 had a thickness of 1.52mm.

A sheet of annealed glass 41 is laminated to the web 33 via the adhesive interlayer 39. In this example the lateral edges of the sheet 41 extend into the curved region, however the lower surface of the sheet of glass 41 is spaced from the web and the curved region 43, 43' by the adhesive interlayer 39.

The sheet of annealed glass 41 is 3mm thick. This thickness (or less) allows the sheet of annealed glass sheet 41 to flex slightly due to the uneven surface 42 of the web 33. This unevenness may be translated to the upper surface of the interlayer 39 that is in adhesive contact with the lower surface of the annealed glass sheet 41. Having a thicker adhesive interlayer reduces the effect of the uneven surface 42 of web 33.

The space between the lateral edges of the sheet of glass 41 and the inner facing surfaces of the flanges 35, 37 may be filled with a suitable sealant.

Figure 4 shows a cross sectional view of another laminated glazing 51 in accordance with the first aspect of the present invention. The laminated glazing 51 has a channel-section glazing element 52 of annealed glass. The channel-section glazing element has a web 53 that is 10mm thick. Extending upwards from the lateral edges of the channel-section glazing element 52 is a first flange 55 and a second flange 57. The flanges 55, 57 have a thickness of 10mm.

Inside the channel a flat sheet of annealed glass 61 is laminated to the inner facing surface of the web 53 via the interlayer 59.

In this example the interlayer 59 extends upwards from the web and contacts the edges of the flat sheet of annealed glass 61 and the inner facing surfaces of the flanges 55, 57. In this example there is no space between the lateral edges of the flat glass sheet 61 and the inner facing surfaces of the flanges 55, 57. This provides the advantage that no sealant is needed to fill the space between the edges of the sheet 61 and the inner facing surfaces of the flanges 55, 57.

In this example the interlayer 59 extends upwards from the web and contacts the edges of the flat sheet of annealed glass 61 and the inner facing surfaces of the flanges 55, 57.

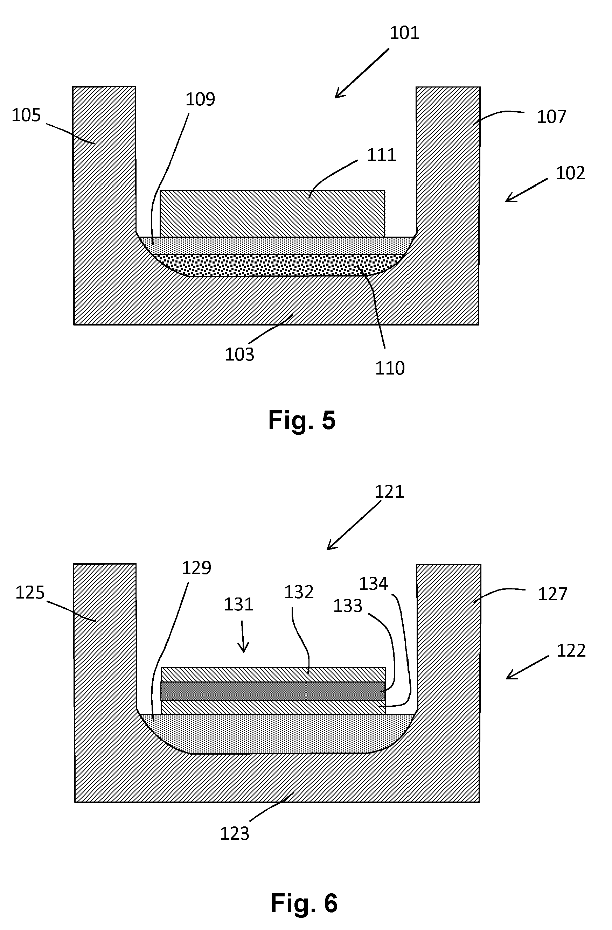

Figure 5 shows a cross sectional view of another laminated glazing 101 in accordance with the first aspect of the present invention. The laminated glazing 101 has a channel-section glazing element 102 of annealed glass. The channel-section glazing element 102 has a web 103 that is 7mm thick. Extending upwards from the lateral edges of the web 103 of the channel-section glazing element 102 is a first flange 105 and a second flange 107. The flanges 105, 107 have a thickness of 7mm.

Inside the channel is a flat sheet of annealed glass 111 that is laminated to the inner facing surface of the web 103 via an adhesive interlayer consisting of a first interlayer 109 and a second interlayer 110. The combined thickness of the interlayers 109 and 110 prior to being incorporated into the laminated glazing 101 is 1.52mm. The interlayer 109 is a sheet of colourless PVB 0.76mm thick. The interlayer 110 is a sheet of coloured PVB 0.76mm thick. In a variation to the example shown in figure 5, each interlayer 109, 110 is the same. Alternatively one of the first and second interlayers 109, 110 may be a different material to the other, for example the first interlayer 109 may be PVB and the second interlayer 110 may be EVA. One of the interlayers 109, 110 may provide the laminated glazing 101 with solar control or improved sound insulation properties.

Figure 6 shows a cross sectional view of another laminated glazing 121 in accordance with the first aspect of the present invention. The laminated glazing 121 has a channel-section glazing element 122 of annealed glass. The channel-section glazing element 122 has a web 123 that is 7mm thick. Extending upwards from the lateral edges of the web 123 of the channel-section glazing element 122 is a first flange 125 and a second flange 127. The flanges 125, 127 each have a thickness of 7mm.

Inside the channel is a laminated pane 131. The laminated pane 131 consists of a first pane of glass 132 joined to a second pane of glass 134 via adhesive interlayer 133. The adhesive interlayer 133 may be any suitable material, for example PVB or EVA. Each pane of glass 132, 134 is 1.5mm thick. The interlayer 133 is 0.38mm thick. The overall thickness of the laminated pane 131 may be less than 3mm by changing the thickness of each or one of the panes 132, 134 and/or the thickness of the interlayer 133.

The laminated pane 131 is laminated to the inner facing surface of the web 123 via an adhesive interlayer 129. The adhesive interlayer 129 has a thickness of 1.9mm and consists of two sheets of 0.76mm thick PVB and a sheet of 0.38mm thick PVB. Preferably one of the 0.76mm sheets of PVB contacts the inner surface of the web 123. Thicker PVB is able to conform to the uneven surface of the web 123.

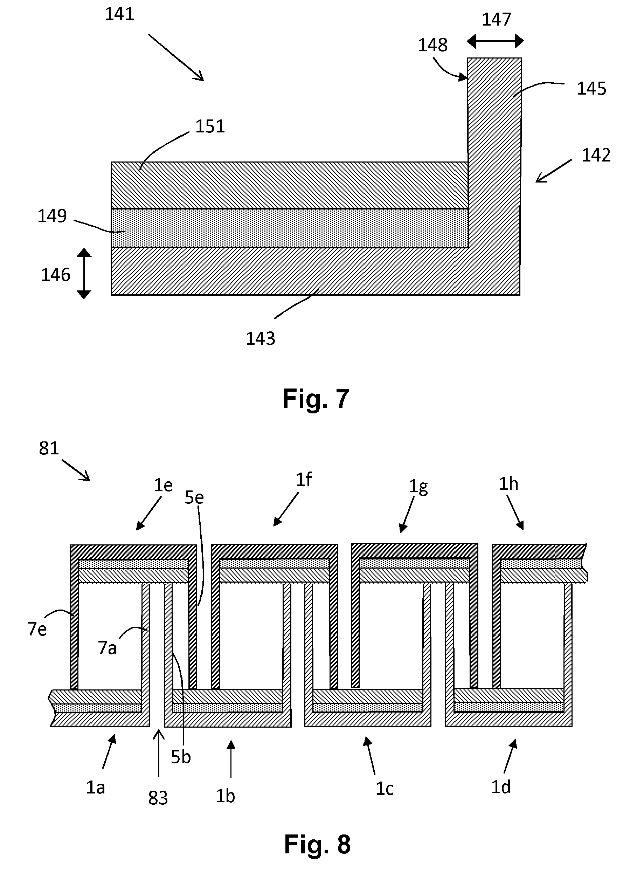

Figure 7 shows a cross sectional view of another laminated glazing 141 in accordance with the first aspect of the present invention. The laminated glazing 141 has a channel-section glazing element 142 of annealed glass. The channel-section glazing element 142 has a web 143 and a single flange 145. The flange 145 is continuous with the web 143.

The flange 145 is substantially perpendicular to the web 143. The flange 145 has an inner facing surface 148.

The web 143 has a thickness 146 of 7mm. The flange 145 has a thickness 147 of 7mm.

A flat annealed glass sheet 151 is laminated to the inner facing surface of web 143 via adhesive interlayer 149. In this embodiment the adhesive interlayer 149 is PVB and has a thickness of 1.52mm. The flat annealed glass sheet 151 is 3mm thick but may be 2.1mm thick.

With reference to the figures 1 to 7, it will be readily apparent that certain features taken from one example of the first aspect of the present invention may be combined with other features taken from another example of the first aspect of the present invention. For example, the adhesive interlayer 9 shown in figure 1 may consist of two layers of interlayer material as shown in figure 5.

Figure 8 shows a cross sectional view of a portion of a double glazed facade 81 comprising a number of laminated glazings in accordance with the first aspect of the present invention. Facades comprising channel-section glazing elements are known in the art, see for example http://www.pilkington.com/resources/generalbrochure_gb.pdf.

The portion of the facade 81 has eight laminated glazings of the type described with reference to figure 1. There are four lower laminated glazings 1a, 1b, 1c and 1d and four upper laminated glazings 1e, 1f, 1g and 1h. When installed in a building, the laminated glazings 1a, 1b, 1c and 1d face the exterior of the building in which the facade is incorporated.

For a given upper laminated glazing, the ends of the flanges face the web of adjacent lower laminated glazings. For a given lower laminated glazing, the ends of the flanges face the web of adjacent upper laminated glazings. For example, the end of flange 7e faces the web of laminated glazing 1a and the end of flange 5e faces the web of laminated glazing 1b.

The space between adjacent flanges is filled with a suitable sealant, which may extend the whole length of the space. In figure 8 the space between the right flange 7a of laminated glazing 1a and the left flange 5b of the laminated glazing 1b is denoted by the numeral 83.

The facade is housed in a suitable frame when installed in a building.

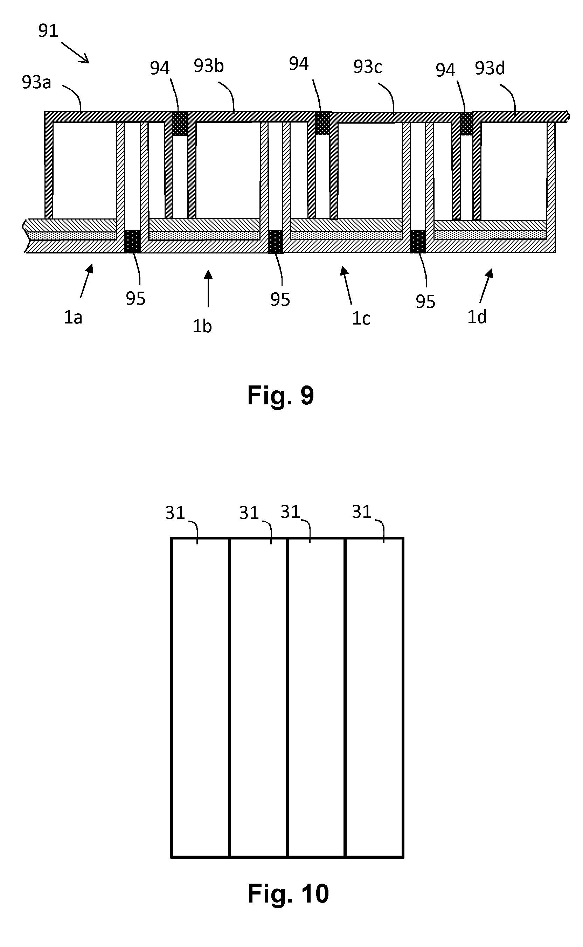

Figure 9 shows a cross sectional view of a portion of a double glazed facade 91 comprising a number of laminated glazings in accordance with the first aspect of the present invention and a number of conventional channel-section glazing elements.

The portion of the facade 91 has four laminated glazings of the type described with reference to figure 1. There are four lower laminated glazings 1a, 1b, 1c and 1d. There are four conventional upper glazing elements 93a, 93b, 93c and 93d.

The flanges of each upper glazing element faces the web of adjacent lower laminated glazings.

When installed, the laminated glazings 1a, 1b, 1c and 1d face the exterior of the building in which the facade is incorporated.

The space between adjacent flanges of the glazing elements 93a, 93b, 93c and 93d is filled with a suitable sealant 94. The sealant 94 may extend the whole length of the space.

The space between adjacent flanges of the laminated glazings 1a, 1b, 1c and 1d is filled with a suitable sealant 95. The sealant 95 may extend the whole length of the space.

The sealants 94, 95 may be the same or different.

The facade 91 is housed in a suitable frame when installed in a building.

It will be evident that the length of the flanges of the glazing elements 93a, 93b, 93c and 93d are shorter than the length of the flanges of the laminated glazings 1a, 1b, 1c and 1d. This is because when the flanges of the glazing elements 93a, 93b, 93c and 93d face the respective web of the respective laminated glazing 1a, 1b, 1c and 1d, there may be contact between the sheet of glazing material of the respective laminated glazing and the end of the flange.

Although the laminated glazing 1 is used in the double glazed facades shown in figures 8 and 9, it will be readily apparent that any of the other examples 31,51, 101 and 121 could be used in place of the laminated glazing 1.

Figure 10 shows a front view of part of a facade for a building comprising four laminated glazings 31 as described with reference to figure 3. For each laminated glazing 31 in the facade there may be suitable sealant material in between adjacent longitudinal edges.

The facade may be horizontally orientated.

Figure 11 shows an isometric projection of the laminated glazing shown is figures 1, 3, 4, 5 and 6. As is known in the art, a channel-section glazing element has a width 15 and a length 16. The length 16 may be a few centimetres up to 7m.

Although it is preferred to have a single sheet of glazing material along the length 16 of the channel-section glazing element (as shown in figure 11), there may be one or more sheets of glazing material laminated to the web of the channel-section glazing element via an adhesive interlayer. For example, if the channel-section glazing element has a width 15 of 30cm, and the flanges are 10mm thick, for flanges being perpendicular to the web the inner faces of the flanges are 28cm apart. If the length of the channel-section 16 is 4m, the sheet of glazing material laminated to the web via an adhesive interlayer may have a width of 28cm or less wide and a length of 4m. Alternatively there may be four sheets of glazing material, each having a width of 28cm or less and a length of 1m. It will be readily apparent that when the channel-section glazing element has a curved region between the web and each flange, the width of the sheet of glazing material may be chosen such that the lateral edges of the sheets of glazing material do not extend into the curved region.

With reference to figure 1 and figure 2, the laminated glazing 1 is made as follows. First the channel-section glazing element 2 is positioned on a suitable table (not shown) with the flanges 5, 7 pointing upwards. Next a sheet of PVB 9 is cut to size and positioned in the channel to rest on the upper facing surface of the web 3. The sheet of PVB 9 is sufficiently sized such that the edges 9a of the PVB 9 do not extend into the curved region 23.

Next a sheet of annealed glass 11 is placed onto the PVB 9. The sheet of glass 11 is sized such that the lateral edges 11a thereof do not extend to the lateral edges 9a of the PVB 9. Alternatively the sheet of glass 11 is sized such that the lateral edges 11a are aligned with the lateral edges 9a of the PVB layer 9. The assembly of channel-section glazing element 2, sheet of PVB 9 and sheet of glass 11 is then laminated using a conventional lamination process using suitably high temperature and pressure.

The laminated glazing 31 shown in figure 3 is made in a similar manner except that the sheet of adhesive interlayer 39 is sized to extend fully into the curved region 43, 43'. The sheet of glass 41 is sized such that the lateral edges thereof extend part way into the curved region 43, 43' but not all the way to the inner facing surfaces of the flanges 35, 37.

The laminated glazing 51 shown in figure 4 is made by first placing the channel-section glazing element 52 onto a suitable table. Next a PVB interlayer 59 is placed into the channel such that the interlayer 59 covers the upper facing surface of the web 53 and also extends up the inner facing surfaces of the flanges 55, 57. Next a flat glass sheet 61 is placed onto the interlayer 59. At this stage the interlayer 59 may be cut to remove excess such that the lateral edges of the adhesive interlayer 59 are aligned with the upper facing surface of the glass sheet 61.

The assembly of channel-section glazing element 52, adhesive interlayer 59 and glass sheet 61 is then subjected to a conventional lamination process.

The laminated glazing 101 shown in figure 5 is made in a similar manner to the laminated glazing 31. However the interlayer joining the glass sheet 111 to the web 103 consists of a first interlayer 109 and a second interlayer 110.

The interlayer 110 is first placed in the channel, followed by the interlayer 109. Next the glass sheet 111 is placed on top of the interlayer 109.

In the example shown in figure 5, the interlayer 109 extends further into the curved region between the flange and the web than does the interlayer 110. The interlayer 109 may extend the same distance into the curved region between the flange and the web i.e. each interlayer 109, 110 has the same width.

The assembly of channel-section glazing element 102, interlayer 110, and interlayer 109 with glass sheet 111 thereon is then subjected to suitable lamination conditions to laminate the glass sheet 111 to the web of the channel-section glazing element 102.

The laminated glazing 121 shown in figure 6 is made in the same way as the laminated glazing 31 with the laminated pane being positioned prior to the lamination process instead of the glass sheet 41. Alternatively the laminated glazing 121 may be made by placing the adhesive interlayer 129 in the channel, then placing glass pane 134 on the adhesive interlayer 129, then placing the adhesive interlayer 133 on the glass pane 134, and finally placing the glass pane 132 on the adhesive interlayer 133. The assembly of channel-section glazing element 122, adhesive interlayer 129, pane 134, adhesive interlayer 133 and pane 132 is then subjected to suitable lamination conditions. In this method of producing the laminated glazing 121 the laminated pane 131 is produced at the same time as the laminated glazing 121.

The present invention has the particular advantage that laminated glazings may be conveniently manufactured using interlayer materials that are in sheet form prior to being laminated. Using a relatively thick adhesive interlayer improves the bond between the relatively uneven inner surface of the web of the channel-section glazing element and a sheet of glazing material laminated thereto. Having the sheet of glazing material relatively thin allows a degree of flexibility that further compensates for the uneven inner facing surface of the web of the channel-section glazing element.

## Claims

1. A laminated glazing comprising a channel-section glazing element and a sheet of glazing material laminated thereto, the channel-section glazing element having a web and at least one flange, wherein the sheet of glazing material is laminated to the web via an adhesive interlayer, **characterised in that** the web has a thickness between 4mm and 12mm, the sheet of glazing material has a thickness between 0.5mm and 3.5mm and the adhesive interlayer in the laminated glazing has a thickness between 0.8mm and 2.3mm.

2. A laminated glazing according to claim 1 wherein the channel-section glazing element has a first flange portion running along a lateral edge of the web and a second flange portion running along the opposing lateral edge of the web.

3. A laminated glazing according to any preceding claim, wherein the thickness of the adhesive interlayer in the laminated glazing is the same, or substantially the same, as the thickness of the adhesive interlayer prior to being incorporated in the laminated glazing.

4. A laminated glazing according to claim 1 or claim 2, wherein the thickness of the adhesive interlayer in the laminated glazing varies by ±20%, preferably ±10% of the thickness of the adhesive interlayer prior to being incorporated in the laminated glazing.

5. A laminated glazing according to any preceding claim, wherein the sheet of glazing material has a thickness between 1mm and 3.2mm, preferably between 2.1mm and 3mm.

6. A laminated glazing according to any preceding claim wherein the adhesive interlayer has a thickness between 0.8mm and 1.6mm, preferably between 0.8mm and 1.2mm.

7. A laminated glazing according to any preceding claim wherein the channel-section glazing element has a curved region between the web and at least one flange and wherein the adhesive interlayer extends into the curved region.

8. A laminated glazing according to claim 7, wherein the sheet of glazing material extends into the curved region and is separated therefrom by the adhesive interlayer.

9. A laminated glazing according to any preceding claim wherein the sheet of glazing material comprises at least one sheet of soda lime silicate glass.

10. A double glazed unit comprising a laminated glazing according to any preceding claim.

11. A method for producing a laminated glazing comprising the steps
(i) providing a channel-section glazing element having a web and at least one flange, the web having a thickness between 4mm and 12mm,
(ii) positioning a first sheet of adhesive interlayer on the web, the first sheet of adhesive interlayer having a thickness between 0.8mm and 2.3mm,
(iii) positioning a first sheet of glazing material having a thickness between 0.5mm and 3.5mm on the sheet of adhesive interlayer, and
(iv) laminating the assembly of channel-section glazing element, adhesive interlayer and sheet of glazing material under suitably high temperature and pressure to laminate the sheet of glazing material to the web via the adhesive interlayer.

12. A method according to claim 11, wherein before or after step (ii), a second sheet of adhesive interlayer having a thickness of between 0.38mm and 0.76mm is positioned on the web.

13. A method according to claim 11 or claim 12, wherein the first sheet of glazing material has a thickness between 1mm and 3.2mm, preferably between 2.1mm and 3mm.

14. A method according to any of the claims 11 to 13, wherein the first sheet of adhesive interlayer has a thickness between 0.8mm and 1.6mm, preferably between 0.8mm and 1.2mm.

## Patentansprüche

1. Laminierte Verglasung, die ein Kanalprofil-Verglasungselement und einen daran laminierten Bogen aus Verglasungsmaterial umfasst, wobei das Kanalprofil-Verglasungselement einen Steg und mindestens einen Flansch aufweist, wobei der Bogen aus Verglasungsmaterial über eine klebende Zwischenschicht an den Steg laminiert ist, **dadurch gekennzeichnet, dass** der Steg eine Dicke im Bereich von 4 mm bis 12 mm aufweist, der Bogen aus Verglasungsmaterial eine Dicke im Bereich von 0,5 mm bis 3,5 mm aufweist und die klebende Zwischenschicht in der laminierten Verglasung eine Dicke im Bereich von 0,8 mm bis 2,3 mm aufweist.

2. Laminierte Verglasung nach Anspruch 1, wobei das Kanalprofil-Verglasungselement einen ersten Flanschabschnitt, der entlang eines seitlichen Randes des Stegs verläuft, und einen zweiten Flanschabschnitt, der entlang des gegenüberliegenden seitlichen Randes des Stegs verläuft, aufweist.

3. Laminierte Verglasung nach einem vorhergehenden Anspruch, wobei die Dicke der klebenden Zwischenschicht in der laminierten Verglasung die Gleiche oder im Wesentlichen die Gleiche wie die Dicke der klebenden Zwischenschicht ist, bevor sie in die laminierte Verglasung eingebracht wird.

4. Laminierte Verglasung nach Anspruch 1 oder Anspruch 2, wobei die Dicke der klebenden Zwischenschicht in der laminierten Verglasung um ± 20 %, vorzugsweise ± 10 % der Dicke der klebenden Zwischenschicht variiert, bevor sie in die laminierte Verglasung eingebracht wird.

5. Laminierte Verglasung nach einem vorhergehenden Anspruch, wobei der Bogen aus Verglasungsmaterial eine Dicke im Bereich von 1 mm bis 3,2 mm, vorzugsweise im Bereich von 2,1 mm bis 3 mm, aufweist.

6. Laminierte Verglasung nach einem vorhergehenden Anspruch, wobei die klebende Zwischenschicht eine Dicke im Bereich von 0,8 mm bis 1,6 mm, vorzugsweise im Bereich von 0,8 mm bis 1,2 mm, aufweist.

7. Laminierte Verglasung nach einem vorhergehenden Anspruch, wobei das Kanalprofil-Verglasungselement einen gekrümmten Bereich zwischen dem Steg und mindestens einem Flansch aufweist und wobei sich die klebende Zwischenschicht in den gekrümmten Bereich erstreckt.

8. Laminierte Verglasung nach Anspruch 7, wobei sich der Bogen aus Verglasungsmaterial in den gekrümmten Bereich erstreckt und davon durch die klebende Zwischenschicht getrennt ist.

9. Laminierte Verglasung nach einem vorhergehenden Anspruch, wobei der Bogen aus Verglasungsmaterial mindestens einen Bogen aus Kalknatronglas umfasst.

10. Doppelverglaste Einheit, die eine laminierte Verglasung nach einem vorhergehenden Anspruch umfasst.

11. Verfahren zum Herstellen einer laminierten Verglasung, das die folgenden Schritte umfasst:
(i) Bereitstellen eines Kanalprofil-Verglasungselements, das einen Steg und mindestens einen Flansch aufweist, wobei der Steg eine Dicke im Bereich von 4 mm bis 12 mm aufweist,
(ii) Positionieren eines ersten Bogens aus klebender Zwischenschicht auf dem Steg, wobei der ersten Bogen aus klebender Zwischenschicht eine Dicke im Bereich von 0,8 mm bis 2,3 mm aufweist,
iii) Positionieren eines ersten Bogens aus Verglasungsmaterial, der eine Dicke im Bereich von 0,5 mm bis 3,5 mm aufweist, auf dem Bogen aus klebender Zwischenschicht, und
(iv) Laminieren der Anordnung aus Kanalprofil-Verglasungselement, klebender Zwischenschicht und Bogen aus Verglasungsmaterial bei einer geeignet hohen Temperatur und einem geeignet hohen Druck, um den Bogen aus Verglasungsmaterial über die klebende Zwischenschicht an den Steg zu laminieren.

12. Verfahren nach Anspruch 11, wobei vor oder nach Schritt (ii) ein zweiter Bogen aus klebender Zwischenschicht, der eine Dicke im Bereich von 0,38 mm bis 0,76 mm aufweist, auf dem Steg positioniert wird.

13. Verfahren nach Anspruch 11 oder Anspruch 12, wobei der erste Bogen aus Verglasungsmaterial eine Dicke im Bereich von 1 mm bis 3,2 mm, vorzugsweise im Bereich von 2,1 mm bis 3 mm, aufweist.

14. Verfahren nach einem der Ansprüche 11 bis 13, wobei der erste Bogen aus klebender Zwischenschicht eine Dicke im Bereich von 0,8 mm bis 1,6 mm, vorzugsweise im Bereich von 0,8 mm bis 1,2 mm, aufweist.

## Revendications

1. Vitrage stratifié comprenant un élément de vitrage à section en canal et une feuille de matériau de vitrage stratifiée sur celui-ci, l'élément de vitrage à section en canal ayant une bande et au moins une aile, dans lequel la feuille de matériau de vitrage est stratifiée sur la bande par l'intermédiaire d'une couche intermédiaire adhésive, **caractérisé en ce que** la bande a une épaisseur comprise entre 4 mm et 12 mm, la feuille de matériau de vitrage a une épaisseur comprise entre 0,5 mm et 3,5 mm et la couche intermédiaire adhésive dans le vitrage stratifié a une épaisseur comprise entre 0,8 mm et 2,3 mm.

2. Vitrage stratifié selon la revendication 1 dans lequel l'élément de vitrage à section en canal a une première partie d'aile s'étendant le long d'un bord latéral de la bande et une deuxième partie d'aile s'étendant le long du bord latéral opposé de la bande.

3. Vitrage stratifié selon l'une quelconque des revendications précédentes, dans lequel l'épaisseur de la couche intermédiaire adhésive dans le vitrage stratifié est la même, ou sensiblement la même, que l'épaisseur de la couche intermédiaire adhésive avant d'être incorporée dans le vitrage stratifié.

4. Vitrage stratifié selon la revendication 1 ou la revendication 2, dans lequel l'épaisseur de la couche intermédiaire adhésive dans le vitrage stratifié varie de ±20 %, de préférence ±10 % de l'épaisseur de la couche intermédiaire adhésive avant d'être incorporée dans le vitrage stratifié.

5. Vitrage stratifié selon l'une quelconque des revendications précédentes, dans lequel la feuille de matériau de vitrage a une épaisseur comprise entre 1 mm et 3,2 mm, de préférence entre 2,1 mm et 3 mm.

6. Vitrage stratifié selon l'une quelconque des revendications précédentes dans lequel la couche intermédiaire adhésive a une épaisseur comprise entre 0,8 mm et 1,6 mm, de préférence entre 0,8 mm et 1,2 mm.

7. Vitrage stratifié selon l'une quelconque des revendications précédentes dans lequel l'élément de vitrage à section en canal a une région courbe entre la bande et au moins une aile et dans lequel la couche intermédiaire adhésive s'étend dans la région courbe.

8. Vitrage stratifié selon la revendication 7, dans lequel la feuille de matériau de vitrage s'étend dans la région courbe et est séparée de celle-ci par la couche intermédiaire adhésive.

9. Vitrage stratifié selon l'une quelconque des revendications précédentes dans lequel la feuille de matériau de vitrage comprend au moins une feuille de verre de silicate sodo-calcique.

10. Unité de double vitrage comprenant un vitrage stratifié selon l'une quelconque des revendications précédentes.

11. Procédé de production d'un vitrage stratifié comprenant les étapes de
(i) fourniture d'un élément de vitrage à section en canal ayant une bande et au moins une aile, la bande ayant une épaisseur comprise entre 4 mm et 12 mm,
(ii) positionnement d'une première feuille de couche intermédiaire adhésive sur la bande, la première feuille de couche intermédiaire adhésive ayant une épaisseur comprise entre 0,8 mm et 2,3 mm,
(iii) positionnement d'une première feuille de matériau de vitrage ayant une épaisseur comprise entre 0,5 mm et 3,5 mm sur la feuille de couche intermédiaire adhésive, et
(iv) la stratification de l'ensemble d'élément de vitrage à section en canal, couche intermédiaire adhésive et feuille de matériau de vitrage sous une température et une pression élevées appropriées pour stratifier la feuille de matériau de vitrage sur la bande par l'intermédiaire de la couche intermédiaire adhésive.

12. Procédé selon la revendication 11, dans lequel, avant ou après l'étape (ii), une deuxième feuille de couche intermédiaire adhésive ayant une épaisseur comprise entre 0,38 mm et 0,76 mm est positionnée sur la bande.

13. Procédé selon la revendication 11 ou la revendication 12, dans lequel la première feuille de matériau de vitrage a une épaisseur comprise entre 1 mm et 3,2 mm, de préférence entre 2,1 mm et 3 mm.

14. Procédé selon l'une quelconque des revendications 11 à 13, dans lequel la première feuille de couche intermédiaire adhésive a une épaisseur comprise entre 0,8 mm et 1,6 mm, de préférence entre 0,8 mm et 1,2 mm.
